Europäisches Patentamt

European Patent Office

Office européen des brevets

(11) Publication number: 0 493 892 A2

# EUROPEAN PATENT APPLICATION

(21) Application number: 91311338.7

(22) Date of filing: 05.12.91

(51) Int. Cl.5: H04L 12/28

(30) Priority: 31.12.90 US 636301

(43) Date of publication of application:
08.07.92 Bulletin 92/28

(84) Designated Contracting States:
DE FR GB IT

(71) Applicant: AMERICAN TELEPHONE AND
TELEGRAPH COMPANY
550 Madison Avenue
New York, NY 10022(US)

(72) Inventor: Aranguren, William L.
31 Sharon Drive
Wayside, New Jersey 07712(US)

Inventor: Bantel, Richard G.
506 Palmer Avenue
West Allenhurst, New Jersey 07711(US)
Inventor: Howard, Jonathan L.
38 Highland Avenue
Monmouth Beach, New Jersey 07750(US)
Inventor: Hunt, Carlton J.
9 Deck Court
Howell, New Jersey 07731(US)

(74) Representative: Watts, Christopher Malcolm
Kelway, Dr. et al
AT&T (UK) LTD. AT&T Intellectual Property
Division 5 Mornington Road
Woodford Green Essex IG8 OTU(GB)

(54) Intrusion detection apparatus for local area network.

(57) Intrusion detection is afforded for local area networks by including one or more intelligent hub units connected to the stations in the network. The intelligent hub unit maintains a list of codes identifying those stations and units connected locally to ports of the intelligent hub unit. When a station initiates a message on the network, a source identifier code unique to the sending station is incorporated in the message as specified by the standard access protocol. At the intelligent hub unit, the source identifier code is recovered from the received message and the port at which the message was received is identified. The received source identifier code is compared with the particular entry in the stored list of codes corresponding to the identified port. If the comparisons fail to generate a matching condition between the source identifier and the particular entry in the list of codes, then the intelligent hub unit generates an alarm indicative of an intrusion on the network.

*FIG.4*

EP 0 493 892 A2

## Technical Field

This invention is related to local area networks and, more particularly, to apparatus for providing security on local area networks.

## Background of the Invention

Local area networks have experienced a tremendous growth since their introduction. These networks permit users to have an orderly interconnection among computer workstation, peripheral devices, and other local area networks. Networks can spread over an area the size of an office or a building to an area the size of several buildings or even a campus. Standard topologies such as ring, star, and bus topologies exist for these networks. Network communication protocols have been set by international and domestic standards organizations.

Communications among the various users on a particular network are handled so that, in general, only one user is permitted to transmit a message at any given time. Collision avoidance, collision detection and token passing techniques assure that this occurs. Entry onto the network is accomplished merely by augmenting a workstation with a compatible network access unit, which usually is in the form of a computer plug-in circuitry board. When the network access unit is connected to the network media, communications can commence. Unfortunately, this gives rise to a significant security problem, namely, unauthorized intrusion. Presently, local area networks are vulnerable to undetectable intrusions by virtue of their broadcast nature.

## Summary of the Invention

Intrusion detection is afforded for local area networks by including one or more intelligent hub units connected to the stations in the network. The intelligent hub unit maintains a list of codes identifying those stations and units connected locally to ports of the intelligent hub unit. When a station initiates a message on the network, a source identifier code unique to the sending station is incorporated in the message as specified by the standard access protocol. At the intelligent hub unit, the source identifier code is recovered from the received message and the port at which the message was received is identified. The received source identifier code is compared with the particular entry in the stored list of codes corresponding to the identified port. If the comparisons fail to generate a matching condition between the source identifier and the particular entry in the list of codes, then the intelligent hub unit generates an alarm indicative of an intrusion on the network.

Scrambling or alteration of communications from an intruding station is accomplished in another embodiment wherein the port identification permits the hub unit to disable the port on which the message was received in response to the alarm indication.

## Brief Description of the Drawing

A more complete understanding of the invention may be obtained by reading the following description of specific illustrative embodiments of the invention in conjunction with the appended drawing in which:

FIGs. 1 and 2 show simplified block diagrams of exemplary star configured local area networks; and

FIGs. 3 through 7 show simplified block diagrams of logical circuits for realizing an intelligent hub unit in accordance with the principles of the invention.

## Detailed Description

In the description which follows, exemplary embodiments are shown for star configured local area networks and, more particularly, for those networks which operate according to a promulgated standard such as an IEEE, for example. These exemplary embodiments are for purposes of illustration, not for limitation. The principles of the present invention are well suited to the wide variety of local area network configurations. It should be clear after reading this description that the principles of this invention apply when the data signals on the network include the appropriate address information such as source or destination address information. This will become clearer upon a reading of the description below.

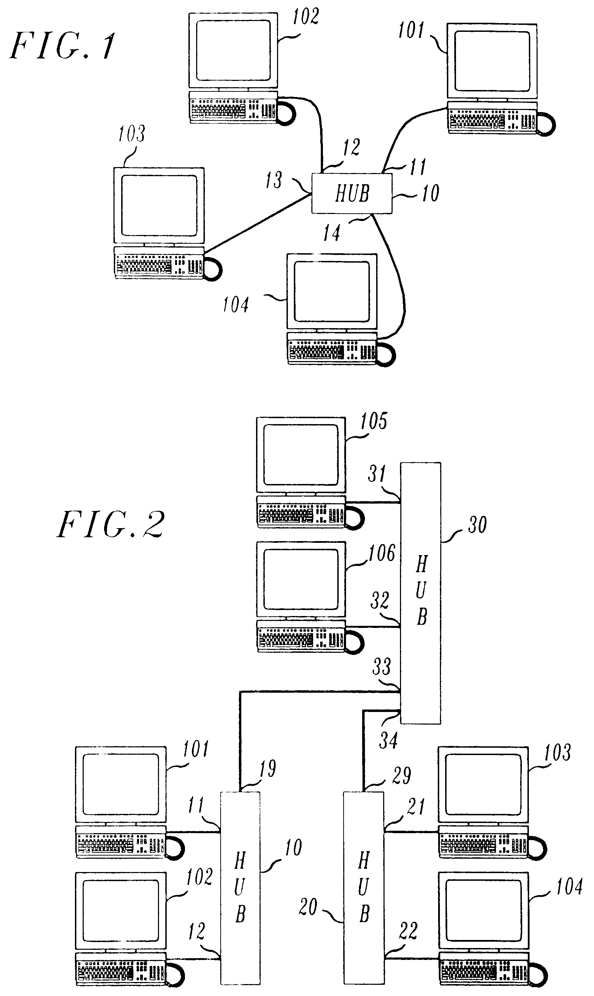

FIGs. 1 and 2 show exemplary local area networks configured in a star topology. Star networks have been defined by international standards bodies as in IEEE Standard 802.3 covering Carrier Sense Multiple Access with Collision Detection, for example. A more detailed description of an embodiment of a star network of the type shown in FIGs. 1 and 2 is given in U. S. Patent 4,674,085 issued June 16, 1987 and AT&T Technology, Vol. 3, No. 1, pp. 32-39 (1988).

As shown in FIG. 1, nodes 101 through 104 are connected to ports 11 through 14, respectively, of hub unit 10. Nodes 101 through 104 are depicted as computers or workstations which include an access unit to provide interconnection on the local area network. A signal originating from node 101 enters port 11 of the hub and is broadcast back to all nodes through their respective ports. Additional information concerning details of nodes, access units, and hubs can be obtained from the '085 patent cited above.

Additional complexity in local area networks is attained by forming a complex star topology. In the complex star topology, star topology local area networks are connected as "nodes" in a higher order local area network as shown in FIG. 2. The local area networks formed by nodes connected to hubs 10 and 20 are connected into ports of hub 30. In addition, stations 105 and 106 are connected directly to ports 31 and 32, respectively, of hub 30. In order to understand more fully the aspects of the present invention, the following description will focus attention on the connection of hubs and stations to hub 30.

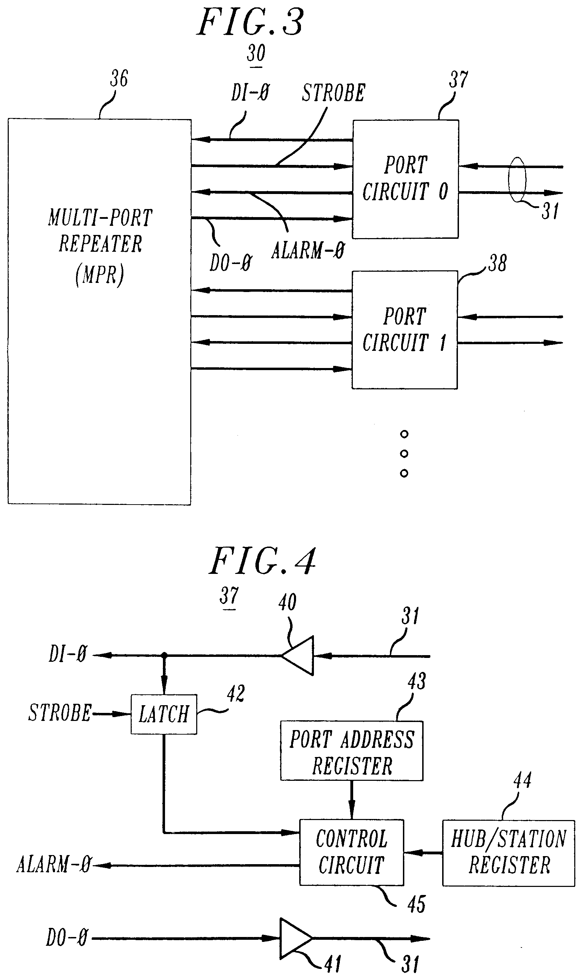

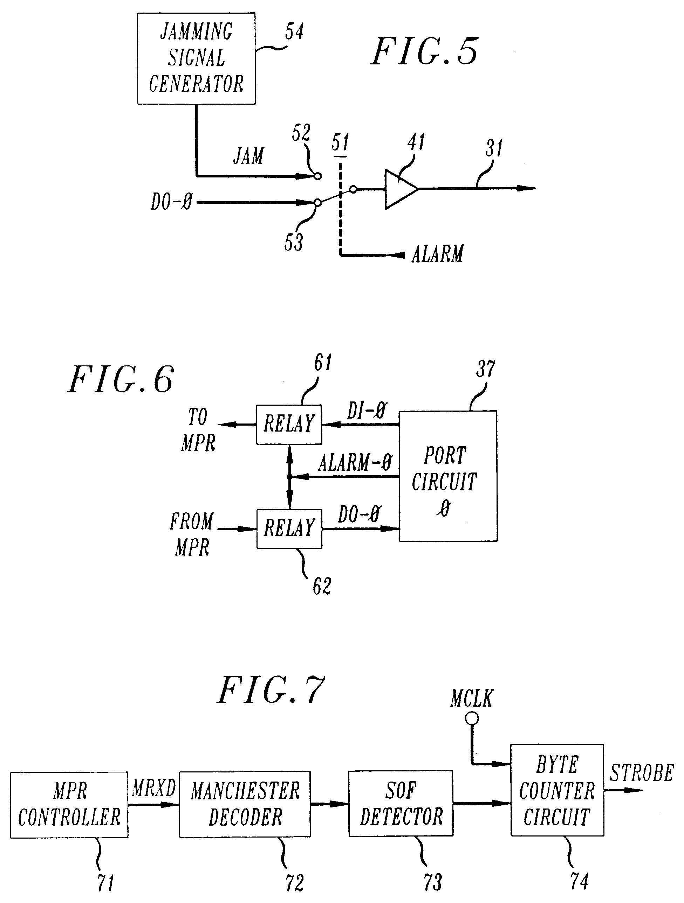

FIG. 3 shows a simplified block diagram of hub 30. Hub 30 comprises a multiport repeater 36 connected to N port circuits. The port circuits provide input and output access to the hub from a station connected to the hub port. For example, station 105 is shown connected to port 0 (port circuit 37) via pair of transmission lines 31. Port circuit 37 passes the transmitted data signal from the station to multiport repeater 36 on line DI-0. Multiport repeater 36 passes the received data signal to the stations via port circuit 37 on line DO-0. A strobe signal is supplied to port circuit 37 in order to assist in capturing address information from the data signals traversing the port circuit. Finally, an alarm signal is output by port circuit 37 to multiport repeater 36 when port circuit 37 detects intrusion by an unauthorized user connected to that port circuit. Additional details concerning an exemplary embodiment of port circuit 37 are shown in FIGs. 4 and 5. Additional details of relevant portions of multiport repeater 36 are shown in FIGs. 6 and 7.

A more detailed block diagram representation of port circuit 37 is shown in FIG. 4. It should be noted that all other port circuits are substantially identical to the port circuit 37. Input transmission line 31 is connected to transmission line receiver 40 which provides electrical treatment to the data signal received from station 105. The output transmitted data signal from transmission line receiver 40 is signal DI-0 which is sent to multiport repeater 36. The output received data signal from multiport repeater 36 is shown as signal DO-0. This signal is sent to port circuit 37 and, particularly, to line driver 41. The output of line driver 31 is connected to output transmission line 31 which is connected back to station 105.

In order to understand the operation of port circuit 37, it is necessary to describe the format of a typical data signal transmitted by a station on the local area network. The data signal is generally in the form of a packet which contains a destination address field, a source address field, and an information field. The network address of the intended receiving party is placed in the destination address field. Similarly, the network address of the originating party is placed in the source address field. The message is contained in the information field. In general, a start-of-frame (SOF) code precedes the address fields. For each of the address fields, a fixed number of bits or, more commonly, bytes is employed. For example, according to IEEE Standards 802.3 and 802.4, a packet or media access control frame includes a seven byte preamble followed by a one byte start-of-frame code followed by six bytes each of destination and source address fields followed by two bytes of information concerning the message length followed by the message in the information field. A cyclic redundancy check code occupies one byte at the end of the packet.

As shown in FIG. 4, port circuit 37 also includes latch 42, port register 43, and hub/station register 44, all connected to control circuit 45. Latch 42 is a standard serial input shift register connected to the output of line receiver 40. Latch 42 monitors signal DI-0. When a strobe signal is received from multiport repeater 36, latch 42 outputs its contents to control circuit 45. Latch 42 has sufficient size to hold the necessary number of bits or bytes to represent the source address of the data signal from station 105. The strobe signal generated by multiport repeater 36 is received by latch 42 at the appropriate time instant when all necessary address bits or bytes have been stored in latch 42.

Port address register 43 is a standard shift register or memory element which contains the address information for the station which is authorized for connection to port circuit 37, that is, the station which is authorized for connection on port 31 of hub 30 (FIG. 2). The contents of port register 43 are available to control circuit 45.

Control circuit 45 is employed to compare the authorized source address stored in register 43 with the address captured at the appropriate instant in latch 42. Provided that the authorized station is connected to port circuit 37, control circuit 45 will perform a successful match of addresses. In this case, control circuit 45 does not send an alarm signal to multiport repeater 36. In the event that an unauthorized station is connected to port circuit 37, the source address for the unauthorized station is captured in latch 42. When the address in latch 42 is compared with the authorized address in register 43, the match fails and control circuit 45 generates an alarm signal which is sent to multiport repeater 36. By generating the alarm in this way, the multiport repeater is made aware of an intrusion detected by the port circuit.

Hub/station register 44 is a standard register or memory element which contains one or more bits indicating the type of connection to the port circuit. It is important, in some cases, for port circuit 37 to be aware of connections to other hubs, bridges, routers, and the like. That is, register 44 contains information indicating that the connection to that port is either a station or a non-station. Control circuit 45 utilizes the information in register 44 to disable the comparison between addresses in latch 42 and register 43 when the information in register 44 indicates a connection to a non-station.

FIG. 5 shows jamming signal generator 54 connected to one terminal 52 of switch 51 while line DO-0 is connected to the other terminal 53 of switch 51. The output of switch 51 is connected to line driver 41 in port circuit 37. The position of switch 51 is determined by the state of the alarm signal generated by the control circuit 45. When the alarm signal is generated, the switch is placed in a position to cause jamming of subsequent messages without disturbing the network protocol.

In FIG. 6, relays 61 and 62 are placed in the input and output paths, respectively, between the port circuit 37 and multiport repeater 36. When the alarm signal is generated, the normally closed relays are opened to disconnect the unauthorized station from the port circuit and the hub.

FIG. 7 shows an exemplary circuit for generating the strobe signal in multiport repeater 36. The circuit includes a serial connection of multiport repeater controller 71, Manchester decoder 72, start of-frame detector 73 and byte counter circuit 74. Multiport repeater controller 71 is of the type described in the AT&T data sheet for the T7200 multiport repeater unit controller which is used primarily for Manchester encoded data in local area networks realized according to IEEE Standard 802.3. An output signal available from controller 71 is the Manchester received data (MRXD). Additional information concerning interfacing to the T7200 circuit is found in an application note entitled "Attachment Unit Interfacing for the T7200 MPR". This output signal is supplied to a standard Manchester decoder which is employed for recovering the uncoded data and a clock signal similar to signal MCLK. Once the data are decoded, start-of-frame detector 73 examines the preamble and start-of-frame sequences and notifies byte counter circuit 74 when a valid start-of-frame code has been received. Byte counter circuit 74 begins counting in either bit or byte increments until a count is reached for the total number of bits or bytes occurring between the end of the start-of-frame code and the end of the source address field. This insures that the source address is captured from line DO-0 into latch 42. When the proper count is reached, byte counter circuit 74 generates a strobe signal which is supplied to the port circuit.

Various other embodiments for realizing the principles of this invention are contemplated. For example, a centralized memory containing a list of source addresses for the hub can be used to replace the plurality of port address registers in the port circuits. Of course, the source addresses must be referenced to the port to which they are connected. As described above, various jamming and squelching techniques may be employed to insure protection of message privacy. Moreover, the port disable function of the T7200 may be utilized in response to an appropriately generated alarm signal.

**Claims**

1.  Hub arrangement for providing security on a local area network in which a plurality of stations are interconnected, the arrangement comprising,

    a plurality of ports for connecting the plurality of stations to the hub arrangement,

    means for storing a plurality of source identifiers, each source identifier referenced to a unique location of the individual port to which the individual station is connected,

    means for determining location of one active port of the plurality of ports in response to a message received by the port,

    means responsive to the message activity for extracting a transmitted source identifier from the message,

    means for comparing the transmitted source identifier to the stored source identifier corresponding to the active port location to generate an alarm indication when the transmitted source identifier fails to match the stored source identifier.

2.  The hub arrangement as defined in claim 1 further comprising means responsive to the alarm indication for disabling message activity from the active port.

3.  The hub arrangement as defined in claim 1 further comprising means for suppressing the alarm indication.

4.  Hub arrangement for providing security on a local area network in which a plurality of stations are interconnected, the arrangement comprising,

    a plurality of ports for connecting the plurality of stations to the hub arrangement,

    means for storing a plurality of source identifiers, each source identifier referenced to a unique location of the individual port to which the individual station is connected,

means for determining location of one active port of the plurality of ports in response to a message received by the port,

means responsive to the message for extracting a transmitted source identifier from the message,

means for comparing the transmitted source identifier to the stored source identifier corresponding to the active port location to alter message activity from the active port when the transmitted source identifier fails to match the stored source identifier.

5. The hub arrangement as defined in claim 4 further comprising means responsive to the alarm indication for disabling message activity from the active port.

6. The hub arrangement as defined in claim 4 further comprising means for suppressing the alarm indication.

*FIG.1*

*FIG.2*

## FIG.3

## FIG.4

7

FIG.5

JAMMING SIGNAL GENERATOR — 54

JAM — 52
51
41
31

DO-∅
53
ALARM

FIG.6

61
37

TO MPR ← RELAY ← DI-∅

ALARM-∅

PORT CIRCUIT ∅

FROM MPR → RELAY → DO-∅

62

FIG.7

MCLK

MPR CONTROLLER —MRXD→ MANCHESTER DECODER → SOF DETECTOR → BYTE COUNTER CIRCUIT →STROBE

71          72          73          74